# EUROPÄISCHE PATENTSCHRIFT

(11) **EP 0 302 433 B1**
(45) Veröffentlichungstag und Bekanntmachung des Hinweises auf die Patenterteilung: **09.06.1993**
(21) Anmeldenummer: 88112465.5
(22) Anmeldetag: 01.08.1988
(51) Int. Cl.: H02M 3/28, H02M 3/335

(54) **Sperrumrichter**
Flyback converter
Convertisseur à récupération

(30) Priorität: 04.08.1987 DE 3725840
(43) Veröffentlichungstag der Anmeldung: 08.02.1989
(73) Patentinhaber: SIEMENS AKTIENGESELLSCHAFT, 80333 München (DE)
(72) Erfinder: Kupka, Detlef, Dipl.-Ing. (FH), D-8033 Martinsried (DE); Stolz, Gerhard, Dipl.-Ing. (FH), D-8034 Germering (DE)

(56) Entgegenhaltungen:
- DE-A- 3 008 861
- DE-A- 3 515 706
- H. GUMMHALTER: "Stromversorgungssysteme der Kommunikationstechnik", Teil 1: Grundlagen, 1983, Seiten 215-223, Siemens AG
- SIEMENS COMPONENTS, Band XX, Nr. 1, Februar 1985, Seiten 24-26; W. RÖSSLER: "Non-linear storage chokes improve operating performance of switched-mode power supplies"
- PROCEEDINGS OF POWERCON 5, Fifth National Solid-State Power Conversion Conference, May 4-6, 1978, San Francisco, Kalifornien, US; Seiten F2,1-18

## Beschreibung

Die Erfindung bezieht sich auf einen wie im Oberbegriff des Patentanspruchs 1 angegebenen Sperrumrichter. Diese Umrichterschaltung enthält einen Hauptregler, der die Ausgangsspannungen eines oder mehrerer Sekundärkreise mehr oder weniger konstant hält.

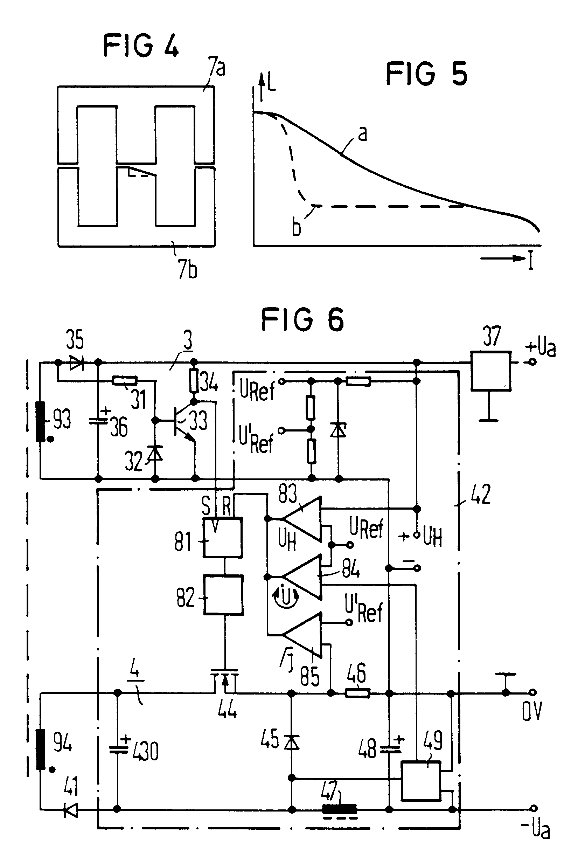

Ein derartiger Sperrumrichter ist bereits aus Proceedings of Powercon 5, Fifth National Solid-State Power Conversion Conference, San Francisco, California, May 4-6, 1978, Seite F2-4, Fig. 4 bekannt.

Zur Speisung von Nachrichtenübertragungssystemen werden Stromversorgungsgeräte benötigt, die in der Regel mehrere Ausgangsspannungen unterschiedlicher Größe und/oder Polarität mit engen Toleranzen in einem großen Lastbereich liefern sollen. Diese Stromversorgungsgeräte werden in vielen Fällen nach den bekannten Prinzipien als Durchflußumrichter oder Sperrumrichter ausgeführt.

Aus H. Gummhalter: "Stromversorgungssysteme der Kommunikationstechnik", Teil 1 Grundlagen, Seite 215 bis 223, Siemens AG, 1983 ist es bereits bekannt, Gleichstromumrichter als Eintakt-Durchflußumrichter oder als Eintakt-Sperrumrichter auszubilden.

Bei dem bekannten Eintakt-Durchflußumrichter fällt die Energieaufnahme auf der Primärseite zeitlich mit der Energieabgabe auf der Sekundärseite zusammen.

Bei dem bekannten Eintakt-Sperrumrichter sind Energieaufnahme und Energieabgabe zeitlich versetzt. Während der Leitphase des Schalttransistors fließt Strom nur durch die Primärwicklung des Transformators, denn Primär- und Sekundärwicklung haben entgegengesetzten Wicklungssinn. Damit ist während der Leitphase des Schalttransistors die im Ausgangskreis liegende Diode in Sperrrichtung gepolt, so daß kein Strom über die Sekundärwicklung fließt. Die Last wird ausschließlich aus einem im Ausgangskreis liegenden Glättungskondensator gespeist.

In der Sperrphase des Schalttransistors schwingt die Polarität der Spannung am Transformator um. Damit wird die im Ausgangskreis liegende Diode leitend. Die während der Leitphase im Transformator gespeicherte Energie wird an die Last abgegeben. Zugleich wird der Glättungskondensator von neuem geladen.

Zweckmäßigerweise versieht man Gleichstromumrichter, mit deren Hilfe mehrere Ausgangsspannungen erzeugt werden, mit einer EMK-Regelung und regelt nur die Ausgangskreise mit Nachreglern nach, bei denen die geforderte Toleranz nicht gehalten wird. Bei der bekannten EMK-Regelung wird als Istwert die Ausgangsspannung einer Hilfswicklung des Transformators abgegriffen und in der Regelung mit dem Sollwert verglichen. Die Beschaltung dieser Hilfswicklung ist zweckmäßigerweise die gleiche, wie bei den Sekundärwicklungen für die Ausgangsspannungen. Die EMK-Regelung hat den Vorteil, daß sich mit Hilfe des Transformators auch die galvanische Trennung der Sekundärkreise von der Primärseite realisieren läßt.

Werden mehrere Ausgangsspannungen unterschiedlicher Höhe und Polarität mit meist kleiner Spannungs-Toleranz bei großem Lastbereich gefordert, so ist in einem Leistungsbereich bis etwa 200 W der EMK-geregelte Sperrumrichter besonders gut geeignet, weil er - abgesehen von Drosseln in Funk-Entstörfiltern - auch dann nur ein magnetisches Bauteil, gebildet durch den Speichertransformator benötigt, wenn eine Potentialtrennung gefordert wird.

Allerdings sind die Kennlinien der einzelnen Ausgangskreise nicht allein durch ihren Innenwiderstand bestimmt, d.h. bei ihrem Verlauf spielen Wickelaufbau und Gestaltung des magnetischen Eisenkreises eine wesentliche Rolle. Wird dabei ein Speichertransformator mit linearer Luftspaltcharakteristik bei konstanter Arbeitsfrequenz verwendet, so zeigt sich, daß besonders bei Einsatz des sogenannten lückenden Betriebes die Ausgangsspannungen überproportional ansteigen, obwohl die EMK-Spannung durch Verändern des Tastgrades konstant gehalten wird. Besonders deutlich zeigt sich dieser Effekte bei relativ großen Ausgangsspannungen.

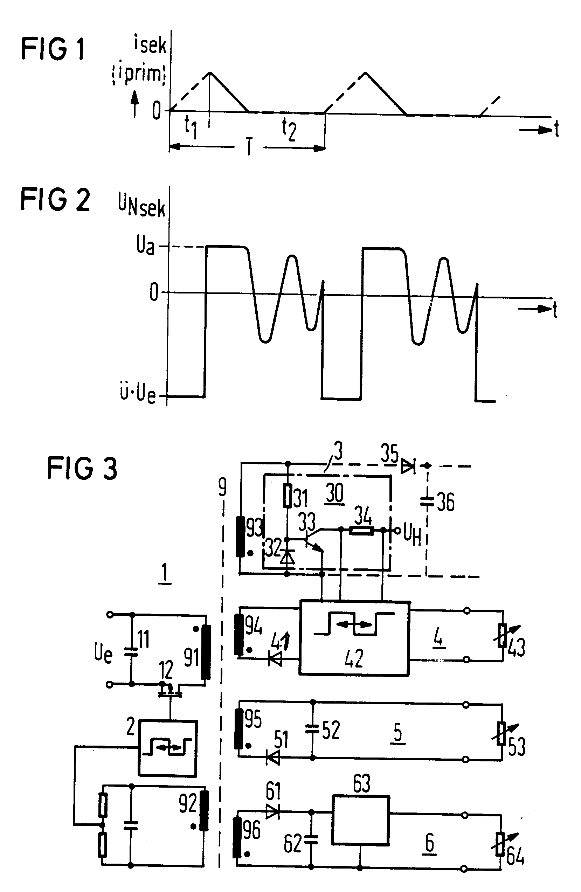

Wie die Figuren 1 und 2 zeigen, wird bei lückendem Betrieb der erzwungene magnetische Fluß im Speichertransformators mehr oder weniger lange zu Null, da der Kern nur noch in Bruchteilen der Periodendauer auf- und abmagnetisiert wird. Während dieser magnetischen Pause schwingt bis zum Ende der Periode ein Schwingkreis, bestehend aus der Induktivität des Transformators und parasitären Kapazitäten, z.B. gegeben durch die Wickelkapazität und Beschaltungskondensatoren usw. auf seiner Eigenfrequenz. Die Phasenlage der Schwingung ist lastabhängig und somit unkontrolliert; der Durchgriff der EMK-Wicklung zu den Ausgangswicklungen und somit die Ausgangsgenauigkeit verschlechtert sich dabei wesentlich.

Sind darüber hinaus besonders kleine Toleranzen der Geräteausgangsspannungen gefordert, so werden Nachregler notwendig, die stetige Regelschaltungen oder schaltende Regler bei größeren Leistungen sein können. Bei kleinen Leistungen werden wegen ihrer Einfachheit stetige Regelschaltungen bevorzugt. Bei größeren Leistungen sind die effektiver arbeitenden schaltenden Regler von Vorteil, obwohl sie an sich aufwendiger sind. Die Grenze vom stetigen zum schaltenden Nachregler ergibt sich in erster Linie aus den am Stellglied auftretenden Verlusten bei Überlast oder Kurzschluß am Ausgang. Die Arbeitsfrequenz der schaltenden Nachregler wird aus Beeinflussungsgründen zweckmäßigerweise mit dem Hauptumrichter synchronisiert. Mit vergleichsweise geringem Schaltungsaufwand ist diese Steuerspannung aus jeder beliebigen Sekudärwicklung des Speichertransformators zu gewinnen, vorausgesetzt, es tritt nicht der lückende Betriebsfall ein. Die freien Schwingungen der Transformator-Spannung würden sonst zum nicht gewollten mehrfachen Ein- und Ausschalten des Nachregler-Transistors während einer Periode führen.

Man kann durch Vergrößern der Induktivität des Speichertransformators den lückenden Betrieb zu möglichst kleiner Ausgangsleistung verlagern. Hierbei sind allerdings höhere Windungszahlen und dadurch voluminösere, verlustreichere Speichertransformatoren notwendig. Feste oder einschaltbare Grundlasten schaffen ebenfalls Abhilfe, bedingen jedoch zusätzliche Verluste und Aufwand. Werden im Falle der Nachreglersynchronisation diese Vorkehrungen nicht getroffen, so muß die Taktgewinnung aus der primärseitigen Steuerschaltung über einen eigenen Übertrager oder Optokoppler realisiert werden. In beiden Fällen sind zusätzliche Bauteile zur Signalaufbereitung notwendig.

Aus W. Rößler: "Nichtlineare Speicherdrosseln verbessern Betriebsverhalten von Schaltnetzteilen", Siemens Components 23 (1985), Heft 1, Seite 24 bis 26 sind bereits Durchflußumrichter bekannt, die eine nichtlineare Speicherdrossel aufweisen. Die Nichtlinearität der Speicherdrossel wird dadurch erreicht, daß der Mittelbutzen einer Kernhälfte an seiner Stirnseite einen Zapfen kleineren Durchmessers aufweist. Der Bereich dieses Zapfens geht deutlich vor dem restlichen Material in Sättigung. Das gesättigte Ferrit verliert seine magnetischen Eigenschaften und wirkt somit wie ein Luftspalt. Zweck der nichtlinearen Speicherdrossel ist es, die Voraussetzungen für eine einfache Gestaltung eines Regelverstärkers zu schaffen, die Freilaufdiode vor gefährlichen Überspannungen zu schützen und hörbare Mischfrequenzen zu vermeiden. Die angegebenen Durchflußwandler weisen jeweils nur einen Ausgangskreis auf, so daß Nachregler nicht in Frage kommen.

Aufgabe der Erfindung ist es, eine wie im Oberbegriff des Patentanspruchs 1 angegebene Umrichterschaltung derart auszubilden, daß die bei lückendem Betrieb während der Stromlücken bestehende Schwingungsgefahr wirksam beseitigt ist. Außerdem soll sich bei möglichst kleiner Grundlast der den Nachregler steuernde Takt aus einer Sekundärspannung des Transformators gewinnen lassen.

Gemäß der Erfindung wird die Umrichterschaltung zur Lösung dieser Aufgabe in der im kennzeichnenden Teil des Patentanspruchs 1 angegebenen Weise ausgebildet. Dabei nimmt die Induktivität ausgehend von dem für maximale Leistung erforderlichen Wert zu.

Durch diese Maßnahmen ergibt sich der Vorteil, daß der Durchgriff der EMK-Wicklung auf die Ausgangsspannungen der einzelnen Kreise über den gesamten Lastbereich optimal bleibt und kein überproportionales Ansteigen der Spannungen bei Schwachlast erfolgt. Durch Vermeidung eines lückenden Betriebes werden Schwingungen unterdrückt, die Funkstörungen erzeugen könnten. Außerdem dann als magnetisches Bauteil ein Übertrager mit einem minimalen Volumen eingesetzt werden.

Bei dem Sperrumrichter werden ein oder mehrere Nachregler mit einem Takt gesteuert, der sich jeweils aus einer Sekundärspannung des Transformators ableiten läßt. Der mit dem EMK-geregelten Sperrumrichter erzielbare Vorteil, daß die galvanische Trennung von Sekundärkreis und Primärkreis mit Hilfe des Transformators realisierbar ist, bleibt daher in vorteilhafter Weise auch in den Fällen erhalten, in denen die dazu erforderliche Synchronisierung der Nachregelung durch eine Sekundärspannung nicht ohne weiteres möglich wäre. Der Nachregler und der diesen steuerbare Taktgeber können dabei an dieselbe oder an verschiedene Sekundärwicklungen des Speichertransformators angeschlossen sein. Der Taktgeber ist insbesondere eine Vorrichtung zur Taktaufbereitung, die den für den Nachregler benötigten Takt aus einer Sekundärspannung ableitet.

Durch die Maßnahmen nach Anspruch 2 ergibt sich der Vorteil, daß sich der Nachregler auf besonders einfache Weise mit dem Hauptregler synchronisieren läßt.

Ein besonders vorteilhafter nichtlinearer Verlauf der Induktivität der Primärwicklung geht aus Anspruch 3 hervor.

Eine weitere vorteilhafte Ausgestaltung der Erfindung ergibt sich aus Anspruch 4.

Die Erfindung wird anhand des in Fig. 3 dargestellten Ausführungsbeispieles näher erläutert. Es zeigen
- Fig. 1: den zeitlichen Verlauf des Primär- und Sekundärstromes,
- Fig. 2: den zeitlichen Verlauf der Sekundärspannung bei einem Sperrumrichter herkömmlicher Art,
- Fig.: 3 einen EMK-geregelten Eintakt-Sperrumrichter, der in einem von mehreren Sekundärkreisen einen schaltenden Nachregler aufweist,
- Fig. 4: einen Transformatorkern für den Speichertransformator des Sperrumrichters nach Fig. 3,
- Fig. 5: die Abhängigkeit der Induktivität von Strom für verschiedene Transformatorkerne,
- Fig. 6: einen für den Sperrumrichter nach Fig. 3 geeigneten Nachregler.

Der in Fig. 3 gezeigte Sperrumrichter wird mit der Eingangsspannung Uₑ gespeist. Der an der Eingangsspannung Uₑ liegende Kondensator 11 ist über den als elektronischer Schalter dienenden Feldeffekttransistors 12 mit der Primärwicklung 91 des Transformators 9 verbunden. Parallel zur ersten Sekundärwicklung 93 des Transformators 9 liegt eine aus der Diode 35 und dem Ladekondensator 36 bestehende Serienschaltung. Am Ladekondensator 36 steht eine erste Ausgangsspannung zur Verfügung, die im gezeigten Beispiel unter anderem als Hilfsspannung für den Nachregler 42 dient.

An die Sekundärwicklung 93 ist außerdem der Taktgeber 30 angeschlossen. Der Taktgeber 30 enthält den bipolaren Transistor 33, dessen Emitter mit einen Anschluß der Sekundärwicklung 93 verbunden ist. Die Basis des Transistors 33 ist über den Widerstand 31 an den anderen Anschluß der Sekundärwicklung 93 geführt. Der Kollektor des Transistors 33 ist über den Widerstand 34 an die weitere Hilfsspannung U_{H} angeschlossen. Antiparallel zur Basis-Emitterstrecke des Transistors 33 liegt die Diode 32. Der Emitter des Transistors 33, der Kollektor des Transistors 33 und der Anschluß für die Hilfsspannung U_{H} sind an den im Sekundärkreis 4 angeordneten schaltenden Nachregler geführt, dessen Eingang über die Diode 41 an die Sekundärwicklung 94 angeschlossen ist und an dessen Ausgang der Lastwiderstand 43 liegt.

Der Sekundärkreis 5 speist den Lastwiderstand 53. Dieser Sekundärkreis 5 enthält den Kondensator 52, der über die Diode 51 an die Sekundärwicklung 95 angeschlossen ist.

Der Sekundärkreis 6 enthält den stetigen Regler 63. Am Eingang des stetigen Reglers liegt der Kondensator 62, der über die Diode 61 an die Sekundärwicklung 96 angeschlossen ist. Am Ausgang des stetigen Reglers liegt der Lastwiderstand 64.

Die Lastwiderstände 43, 53 und 64 sind jeweils als veränderbarer Widerstand dargestellt, da sie sich zwischen Leerlauf und Vollast verändern können.

Der Speichertransformator 9 mit dem genannten Primärkreis 1 bildet zusammen mit den Sekundärkreisen 3 bis 6 einen Sperrumrichter. Dieser Sperrumrichter ist mit einer Anordnung zur EMK-Regelung versehen. Die hierzu vorgesehene Regelanordnung enthält einen an die Hilfswicklung 92 des Transformators 9 angeschlossenen Pulsbreitenmodulator 2, der den Feldeffekttransistor 12 steuert, und zwar derart, daß die EMK- bzw. Leerlaufspannung des Sperrumrichters wenigstens näherungsweise auf einem konstanten Wert gehalten wird.

Die EMK-Regelung ist z.B. für den Ausgangskreis 5 optimiert. Der EMK-Kreis enthält zweckmäßigerweise eine aus einer Diode und einem Ladekondensator bestehende und an die Hilfswicklung 92 angeschlossene Serienschaltung. Parallel zum Kondensator liegt ein Spannungsteiler, mit dessen Hilfe eine der Leerlaufspannung des Sperrumrichters proportionale Hilfsspannung erzeugt wird.

Im Impulsbreitenmodulator 2 wird eine Referenzspannung mit der EMK-Spannung verglichen und die Pulsbreite der Steuerimpulse entsprechend eingestellt.

Bei Verwendung von geeigneten nichtlinearen Kernen kann, mit einem Minimum an Windungen und Kerngröße, über den gesamten Lastbereich des Sperrumrichters mit einer sehr hochohmigen Grundlast der lückende Betrieb vermieden werden. Der magnetische Fluß je Periode wird nicht Null und der Durchgriff der einzelnen Wicklungen zur EMK-Wicklung bleibt optimal.

Die synchronisierte Steuerung des geschalteten Nachreglers 42 oder mehrerer solcher Nachregler arbeitet im gesamten Lastbereich mit großer Funktionssicherheit. Während der gesamten Sperrzeit des primären Transistors 12 steht - auch bei Schwachlast - an den Wicklungen 93...96 eine Rechteckspannung an. Diese wird mit Hilfe des als Vorrichtung zur Taktaufbereitung ausgebildeten Taktgebers 30 auf ein für die Steuerschaltung des Nachreglers 42 geeignetes Steuersignal umgesetzt. Die Spannungs- oder Stromregelschaltung des Nachreglers 42 reduziert das Tastverhältnis zur Ansteuerung seines Schalttransistors entsprechend des Lastwiderstandes 43. Die Diode 32 verhindert den Durchbruch der Basis-Emitterstrecke von Transistor 33 während der Einschaltzeit von Transistor 12.

Sind mehrere Nachregler vorgesehen, so können diese mit Hilfe ein und desselben Taktgebers oder mehrerer Taktgeber synchronisiert werden. Der Nachregler kann gegebenenfalls zusammen mit dem ihn synchronisierenden Taktgeber an ein und derselben Sekundärwicklung liegen.

Die in Fig. 4 gezeigte Transformatorkern besteht aus zwei Kernhälften 7a und 7b. Die eine Kernhälfte 7b weist einen sich stufenlos verjüngenden Mittelbutzen auf.

Dadurch wird erreicht, daß sich die Induktivität bei Verringern des Stromes stetig ändert und nicht so schlagartig, wie das bei einem Stufenschliff des Luftspaltes erfolgt. Den Verlauf der Induktivität zeigt Fig. 5.

Dies wirkt sich vorteilhaft aus, da durch die stetige Änderung der Induktivität der Sperrumrichter zwischen Leerlauf und Volllast kontinuierlich entsprechend Kurve a arbeitet, während bei Verwendung eines Luftspaltes mit Stufenschliff entsprechend Kurve b der Strom an der Stelle schwingen kann, wo die Änderung der Induktivität am größten ist. Diese Schwingungen wirken sich auf die Welligkeit der Ausgangsspannung und die Funkstörspannung negativ aus.

Fig. 6 zeigt für den Sperrumrichter nach Fig. 3 weitere Einzelheiten der Synchronisation des Nachreglers 42 durch den Sekundärkreis 3. Der Sekundärkreis 3 ist mit dem weiteren Nachregler 37 versehen.

Im Sekundärkreis 4 ist der Speicherkondensator 430 über die Diode 41 an die Sekundärwicklung 94 angeschlossen. In einem Längszweig liegt die Source-Drain-Strecke des als Stellglied dienenden Feldeffekttransistors 44. Darauf folgt in einem Querzweig die Freilaufdiode 45, in einem Längszweig die Drossel 47 und in einem Querzweig der weitere Speicherkondensator 48. In dem der Drossel 47 gegenüberliegenden Längszweig ist der Strommeßwiderstand 46 angeordnet.

Der Steuerelektrode des Feldeffekttransistors 44 ist der Treiber 82 vorgeschaltet. Der Treiber 82 liegt am Ausgang des RS-Flip-Flops 81, das mit seinem Setzeingang S an den Kollektor des Transistors 33 und mit seinem Rücksetzeingang R an die Ausgänge der Komparatoren 83, 84 und 85 angeschlossen ist. Der Komparator 83 überwacht die Hilfspannung U_{H}, die zur Versorgung der Steuerschaltung dient. Bei zu niedriger Hilfspannung U_{H} bleibt der Transistor 44 gesperrt.

Der Komparator 84 arbeitet als Spannungsregler Er vergleicht die Ausgangsspannung des Netzwerkes 49 mit einer Referenzspannung, wobei das Netzwerk 49 die Ausgangsspannung des Sekundärkreises 4 und die an der Drossel 47 auftretende Spannung erfaßt. Der Komparator 85 vergleicht den am Strommeßwiderstand 46 auftretenden Spannungsabfall mit einer weiteren Referenzspannung und bewirkt eine Strombegrenzung bei Überlast am Ausgang.

## Patentansprüche

1. Sperrumrichter mit einem an eine Primärwicklung eines Speichertransformators führenden Primärkreis und mit wenigstens einem an eine Sekundärwicklung des Speichertransformators angeschlossenen Ausgangskreis, wobei die Primärwicklung (41) eines Speichertransformators (9) über einen mittels eines Impulsbreitenmodulators (2) steuerbaren elektronischen Schalter (Feldeffekttransistor) (12) an eine Gleichspannungsquelle (11) angeschlossen und in wenigstens einem Sekundärkreis (4) die Sekundärwicklung (94) über eine Diode (41) an eine Last (43) geführt ist, wobei der Kern des Speichertransformators derart ausgebildet ist, daß die Induktivität der Wicklungen (91 - 96) des Speichertransformators (9) mit sinkendem Strom durch die Wicklungen zunimmt,
**dadurch gekennzeichnet**,
daß der Speichertransformator (9) mehrere jeweils an eine eigene Sekundärwicklung angeschlossene Ausgangskreise aufweist und daß die Primärwicklung (91) des Speichertransformators (9) über einen mittels des Impulsbreitenmodulators (2) im Sinne einer EMK-Regelung steuerbaren einem Hauptregler angehörenden elektronischen Schalter (Feldeffekttransistor) (12) an die Gleichspannungsquelle (11) angeschlossen und in wenigstens einem Sekundärkreis (4) die Sekundärwicklung (94) über eine Diode (41) und einen durch einen Taktgeber steuerbaren Nachregler (42) an eine Last (43) geführt ist und daß ein Synchronisiereingang des Taktgebers an eine Sekundärwicklung (93) angeschlossen ist.

2. Sperrumrichter nach Anspruch 1,
**dadurch gekennzeichnet**, daß
der Taktgeber (30) einen bipolaren Transistor (33) enthält, dessen Emitter an einen Anschluß der Sekundärwicklung (93), dessen Basis über einen Widerstand (31) an den anderen Anschluß der Sekundärwicklung (93) und dessen Kollektor über einen Widerstand (34) an eine Hilfsspannung (U_{H}) geführt ist und daß antiparallel zur Basis-Emitterstrecke des Transistors (33) eine Diode (32) angeordnet ist und daß die Emitter-Kollektorstrecke des Transistors (33) und/oder der in Serie dazu liegende Widerstand (34) den Ausgang des Taktgebers (30) bildet.

3. Sperrumrichter nach einem der Ansprüche 1 und 2,
**dadurch gekennzeichnet**, daß
eine von zwei Kernhälften, aus denen der Kern des Speichertransformators zusammengesetzt ist, einen sich stufenlos verjüngenden Mittelbutzen aufweist.

4. Sperrumrichter nach einem der Ansprüche 1 bis 3,
**dadurch gekennzeichnet**, daß
der Taktgeber und der Nachregler gemeinsam an ein und dieselbe Hilfsspannung (U_{H}) geführt sind.

## Claims

1. Flyback converter having a primary circuit which is connected to a primary winding of a storage transformer, and having at least one output circuit which is connected to a secondary winding of the storage transformer, the primary winding (41) of a storage transformer (9) being connected to a DC voltage source (11) via an electronic switch (field-effect transistor) (12) which can be controlled by means of a pulse-width modulator (2), and, in at least one secondary circuit (4), the secondary winding (94) being connected to a load (43) via a diode (41), the core of the storage transformer being constructed in such a manner that the inductance of the windings (91-96) of the storage transformer (9) increases as the current through the windings decreases, characterised in that the storage transformer (9) has a plurality of output circuits which are in each case connected to a dedicated secondary winding, and in that the primary winding (91) of the storage transformer (9) is connected to the DC voltage source (11) via an electronic switch (field-effect transistor) (12) which can be controlled by means of the pulse-width modulator (2), in the sense of e.m.f. control, and belongs to a main controller, and, in at least one secondary circuit (4), the secondary winding (94) is connected via a diode (41) and a follow-up controller (42), which can be controlled by means of a clock transmitter, to a load (43), and in that a synchronisation input of the clock transmitter is connected to a secondary winding (93).

2. Flyback converter according to Claim 1, characterised in that the clock transmitter (30) contains a bipolar transistor (33) whose emitter is connected to one connection of the secondary winding (93) whose base is connected via a resistor (31) to the other connection of the secondary winding (93) and whose collector is connected via a resistor (34) to an auxiliary voltage (U_{H}), and in that a diode (32) is arranged in reverse parallel with respect to the base-emitter junction of the transistor (33), and in that the emitter-collector junction of the transistor (33) and/or the resistor (34) which is located in series therewith forms the output of the clock transmitter (30).

3. Flyback converter according to one of Claims 1 and 2, characterised in that one of two core halves from which the core of the storage transformer is assembled has a central region which tapers continuously.

4. Flyback converter according to one of Claims 1 to 3, characterised in that the clock transmitter and the follow-up controller are jointly connected to one and the same auxiliary voltage (U_{H}).

## Revendications

1. Convertisseur de blocage comportant un circuit primaire raccordé à un enroulement primaire d'un transformateur de stockage, et au moins un circuit de sortie raccordé à un enroulement secondaire du transformateur de stockage, et dans lequel l'enroulement primaire (41) d'un transformateur de stokage (9) est raccordé par l'intermédiaire d'un interrupteur électronique (transistor à effet de champ) (12), commandable au moyen d'un modulateur d'impulsions en durée (2), à une source de tension continue (11), et, dans au moins un circuit secondaire (4), l'enroulement secondaire (94) est raccordé à une charge (43) par l'intermédiaire d'une diode (41), le noyau du transformateur de stockage étant agencé de telle sorte que l'inductance des enroulements (91-96) du transformateur de stockage (9) augmente lorsque le courant circulant dans les enroulements diminue, caractérisé par le fait
que le transformateur de stockage (9) possède plusieurs circuits de sortie raccordés respectivement à un enroulement secondaire particulier, et que l'enroulement primaire (91) du transformateur de stockage (9) est raccordé par l'intermédiaire d'un interrupteur électronique (transistor à effet de champ) (12), qui est commandable au moyen du modulateur d'impulsions en durée (2) dans le sens d'une régulation de la force électromotrice et fait partie d'un régulateur principal, à la source de tension continue (11) et, dans au moins un circuit secondaire (4), l'enroulement secondaire (94) est raccordé à une charge (43) par l'intermédiaire d'une diode (41) et d'un régulateur d'asservissement (42) commandable au moyen d'un générateur de cadence, et qu'une entrée de synchronisation du générateur de cadence est raccordée à un enroulement secondaire (93).

2. Convertisseur de blocage suivant la revendication 1, caractérisé par le fait que le générateur de cadence (30) comporte un transistor bipolaire (33), dont l'émetteur est raccordé à une borne de l'enroulement secondaire (93), dont la base est raccordée par l'intermédiaire d'une résistance (31) à l'autre borne de l'enroulement secondaire (93) et dont le collecteur est raccordé, par l'intermédiaire d'une résistance (34), à une tension auxiliaire (U_{H}), et qu'une diode (32) est branchée selon un montage antiparallèle avec la voie base-émetteur du transistor (33), et que la voie émetteur-collecteur du transistor (33) et/ou la résistance (34) branchée en série avec le transistor forme la sortie du générateur de cadence (30).

3. Convertisseur de blocage suivant l'une des revendications 1 et 2, caractérisé par le fait que l'une de deux moitiés, dont est constitué le noyau du transformateur de stockage, possède un plot médian qui se rétrécit progressivement.

4. Convertisseur de blocage suivant l'une des revendications 1 à 3, caractérisé par le fait que le générateur de cadence et le régulateur d'asservissement sont raccordés en commun à une tension auxiliaire (U_{H}).
